# EUROPEAN PATENT APPLICATION

(11) **EP 4 835 147 A1**
(43) Date of publication of application: **04.11.2026**
(21) Application number: 24913029.5
(22) Date of filing: 26.12.2024
(51) Int. Cl.: C25B 9/23, C08F 14/18, C25B 1/04, C25B 9/00, C25B 11/052, C25B 11/056, C25B 11/081, C25B 13/04, C25B 13/08

(54) **SOLID POLYMER ELECTROLYTE MEMBRANE, MEMBRANE ELECTRODE ASSEMBLY, WATER ELECTROLYSIS DEVICE, METHOD FOR PRODUCING HYDROGEN, AND METHOD FOR PRODUCING MEMBRANE ELECTRODE ASSEMBLY**

(30) Priority: 27.12.2023 JP 2023221212
(71) Applicant: AGC Inc., Chiyoda-ku Tokyo 100-8405 (JP)
(72) Inventor: HAYABE, Shintaro, Tokyo 100-8405 (JP); OKUYAMA, Takumi, Tokyo 100-8405 (JP); SAWADA, Toshiaki, Tokyo 100-8405 (JP)
(74) Representative: Müller-Boré & Partner Patentanwälte PartG mbB
(86) International application number: PCT/JP2024/046222
(87) International publication number: WO 2025/143143

(57) **Abstract**

To provide a polymer electrolyte membrane, with which an increase of the electrolysis voltage after water electrolysis is conducted for a certain period can be suppressed, and which is less likely to have pinholes. A polymer electrolyte membrane, which comprises a fluorinated polymer having ion exchange groups, a platinum-containing material, agglomerates containing cerium oxide particles, and a woven fabric, wherein the agglomerates have an average particle size of 0.1 to 10 µm.

## Description

### TECHNICAL FIELD

The present disclosure relates to a polymer electrolyte membrane, a membrane electrode assembly, a water electrolyzer, a hydrogen production method and a membrane electrode assembly production method.

### BACKGROUND ART

In the so-called power-to-gas technology for storing and using surplus electric power by converting it to gas, the utilization of polymer electrolyte membrane water electrolyzers (PEM water electrolyzers) has been explored.

For example, Patent Document 1 discloses a polymer electrolyte membrane water electrolyzer provided with a membrane electrode assembly including an anode and a cathode, each having a catalyst layer, and a solid polymer electrolyte membrane disposed between the anode and the cathode.

### PRIOR ART DOCUMENTS

### PATENT DOCUMENTS

Patent Document 1: WO2022/050363

### DISCLOSURE OF INVENTION

### TECHNICAL PROBLEM

Recent years have seen a demand for water electrolyzers with higher performance.

The present inventors have assessed a water electrolyzer having a polymer electrolyte membrane as disclosed in Patent Document 1, and found it sometimes difficult to suppress both increase of the electrolysis voltage after water electrolysis is conducted for a certain period and formation of pinholes.

The present disclosure has been made in view of the above-mentioned problems. It is an object of the present invention to provide a polymer electrolyte membrane with which an increase of the electrolysis voltage after water electrolysis is conducted for a certain period can be suppressed, and which is less likely to have pinholes; a membrane electrode assembly; a water electrolyzer; a hydrogen production method; and a membrane electrode assembly production method.

### SOLUTION TO PROBLEM

The present disclosure includes the following configurations.
[1] A polymer electrolyte membrane, which comprises a fluorinated polymer having ion exchange groups, a platinum-containing material, agglomerates containing cerium oxide particles, and a woven fabric,
   wherein the agglomerates have an average particle size of 0.1 to 10 µm.
[2] The polymer electrolyte membrane according to [1], wherein the agglomerates have an average particle size of more than 3 µm.
[3] The polymer electrolyte membrane according to [1] or [2], wherein the fluorinated polymer has an ion exchange capacity of 0.90 to 2.00 meq/g dry resin.
[4] The polymer electrolyte membrane according to any one of [1] to [3], wherein the mass of the agglomerates per 1 cm² of the polymer electrolyte membrane is 0.010 mg/cm² or more.
[5] The polymer electrolyte membrane according to any one of [1] to [4], wherein the platinum-containing material is biased toward one surface side of the polymer electrolyte membrane.
[6] The polymer electrolyte membrane according to any one of [1] to [5], wherein the platinum-containing material is supported on a carrier.
[7] The polymer electrolyte membrane according to any one of [1] to [6], wherein the ion exchange groups of the fluorinated polymer are sulfonic acid functional groups.
[8] The polymer electrolyte membrane according to any one of [1] to [7], wherein the fluorinated polymer has units represented by the formula (1-1):

   formula (1-1) -[CF₂-CF(-O-R^{f1}-SO₃M)]-

   in the formula (1-1), R^{f1} is a perfluoroalkylene group which may contain an oxygen atom between carbon atoms, and M is a hydrogen atom, an alkali metal or a quaternary ammonium cation.
[9] The polymer electrolyte membrane according to any one of [1] to [8], wherein the woven fabric is constituted by a material selected from the group consisting of a polytetrafluoroethylene, a tetrafluoroethylene/perfluoroalkyl vinyl ether copolymer, a polyether ether ketone and a polyphenylene sulfide.
[10] A membrane electrode assembly, which comprises the polymer electrolyte membrane as defined in any one of [1] to [9],
   a cathode catalyst layer provided on one surface of the polymer electrolyte membrane, and
   an anode catalyst layer provided on the other surface of the polymer electrolyte membrane.
[11] A water electrolyzer, which comprises, the membrane electrode assembly as defined in [10],
   a power supply unit connecting the cathode catalyst layer side and the anode catalyst layer side of the membrane electrode assembly, and
   a water supply unit to supply water to the anode catalyst layer side.
[12] A hydrogen production method, which comprises electrolyzing water by the water electrolyzer as defined in [11] to produce hydrogen.
[13] A method for producing a membrane electrode assembly comprising the polymer electrolyte membrane as defined in any one of [1] to [9], a cathode catalyst layer and an anode catalyst layer,
   which comprises providing the cathode catalyst layer on one surface of the polymer electrolyte membrane, and providing the anode catalyst layer on the other surface of the polymer electrolyte membrane.

### ADVANTAGEOUS EFFECTS OF INVENTION

According to an embodiment of the present invention, provided are a polymer electrolyte membrane with which an increase of the electrolysis voltage after water electrolysis is conducted for a certain period can be suppressed, and which is less likely to have pinholes; a membrane electrode assembly; a water electrolyzer; a hydrogen production method; and a membrane electrode assembly production method.

### BRIEF DESCRIPTION OF DRAWINGS

Fig. 1 is a schematic cross-sectional view illustrating a polymer electrolyte membrane with biased arrangement of a platinum-containing material.
Fig. 2 is a schematic cross-sectional view illustrating an example of the membrane electrode assembly of the present disclosure.
Fig. 3 is a schematic cross-sectional view illustrating an example of the membrane electrode assembly of the present disclosure.

### DESCRIPTION OF EMBODIMENTS

The following definitions of terms apply throughout the present specification and claims unless otherwise specified.

An "ion exchange group" refers to a group containing at least one ion exchangeable for a different ion, such as a sulfonic acid functional group and a carboxylic acid functional group.

A "sulfonic acid functional group" refers to a sulfonic acid group (-SO₃H) or a sulfonate group. The sulfonate group may be, for example, (-SO₃⁻)Ma⁺, (-SO₃⁻)₂Mb²⁺ or (-SO₃⁻)₃Mc³⁺ (where Ma⁺ is an alkali metal ion or a quaternary ammonium cation; Mb²⁺ is a divalent metal ion; Mc³⁺ is a trivalent metal ion). When there are two ligands, the number of ion exchange groups is counted as 2, and when there are three ligands, the number of ion exchange groups is counted as 3.

A "carboxylic acid functional group" refers to a carboxylic acid group (-COOH) or a carboxylate group. The carboxylate group may be, for example, (-COO⁻)Ma⁺, (-COO⁻ )₂Mb²⁺ or (-COO⁻)₃Mc³⁺ (where Ma⁺ is an alkali metal ion or a quaternary ammonium cation; Mb²⁺ is a divalent metal ion; and Mc³⁺ is a trivalent metal ion). When there are two ligands, the number of ion exchange groups is counted as 2, and when there are three ligands, the number of ion exchange groups is counted as 3.

A "precursor membrane" refers to a membrane containing a polymer having groups convertible to ion exchange groups.

A "group convertible to an ion exchange group" refers to a group that can be converted to an ion exchange group by treatments such as hydrolysis and conversion to acid form.

A "group convertible to a sulfonic acid functional group" refers to a group that can be converted to a sulfonic acid functional group by treatments such as hydrolysis and conversion to acid form.

A "group convertible to a carboxylic acid functional group" refers to a group that can be converted to a carboxylic acid functional group by known treatments such as hydrolysis and conversion to acid form.

A "unit" in a polymer refers to an atomic group derived from a single monomer molecule, which is formed by polymerization reaction of the monomer. A unit may be an atomic group formed directly by polymerization or may be an atomic group formed by polymerization followed by modification to a partially different structure.

A numerical range expressed using "to" means a range including numerical values described before and after "to" as the lower and upper limits. In a series of numerical ranges described in the present specification, the upper limit or lower limit of a numerical range may be replaced by the upper limit or lower limit of another numerical range in the same series. The upper limit or lower limit of any numerical range described in the present specification may be replaced by any of numerical values indicated in Examples.

### [Electrolyte membrane]

The polymer electrolyte membrane of the present disclosure (hereinafter also referred to simply as "the electrolyte membrane") comprises a fluorinated polymer having ion exchange groups (hereinafter also referred to simply as "the fluorinated polymer (I)"), a platinum-containing material, agglomerates containing cerium oxide particles, and a woven fabric,
wherein the agglomerates have an average particle size of 0.1 to 10 µm.

In the present disclosure, the agglomerates containing cerium oxide particles and having an average particle size of 0.1 to 10 µm will also be referred to as "the present agglomerates".

The present inventors have found that with an electrolyte membrane that contains agglomerates containing cerium oxide particles and the agglomerates having an average particle size of less than 0.1 µm, when applied to a water electrolyzer, the electrolysis voltage tends to increase after water electrolysis is conducted for a certain period of time. Since the cerium oxide particles are fine, the surface area of the particles increases, and when water electrolysis is conducted for a certain period (for example 500 hours) using such relatively fine cerium oxide particles, cerium is likely to be eluted from the cerium oxide particles with time. It is estimated that the eluted cerium decreases the proton conductivity of the ionomer in the electrolyte membrane and in the catalyst layers, thus increasing the electrolysis voltage.

The present inventors have further found that with an electrolyte membrane that contains agglomerates containing cerium oxide particles, the agglomerates having an average particle size of more than 10 µm, the mesh opening of the woven fabric tends to expand when the water electrolyzer is operated, and due to swelling of the expanded portion, pinholes are likely to form. It is estimated that in such a case, by using the present agglomerates (the agglomerates containing cerium oxide particles and having an average particle size of 10 µm or less), expansion of the mesh opening of the woven fabric can be suppressed and thus pinholes are less likely to form.

The electrolyte membrane may have a single-layer structure or a multilayer structure. Specific embodiments of the electrolyte membrane having a multilayer structure include those having a laminated structure of electrolyte layers different in content of at least one of the platinum-containing material and the present agglomerates, and having a laminated structure of electrolyte layers different in ion exchange capacity.

It is preferred that the electrolyte membrane contains the platinum-containing material and the present agglomerates in a single layer, in that hydroxy radicals derived from hydrogen peroxide generated when the platinum-containing material recombines hydrogen and oxygen, can be efficiently recovered by cerium oxide contained in the present agglomerates.

Each of the platinum-containing material and the present agglomerates contained in the electrolyte membrane may be distributed throughout the entire electrolyte membrane or may be biased toward one surface side of the electrolyte membrane.

It is preferred that at least one of the platinum-containing material and the present agglomerates is biased toward one surface side of the electrolyte membrane. It is more preferred that, among the platinum-containing material and the present agglomerates, at least the platinum-containing material is biased toward one surface side of the electrolyte membrane. The platinum-containing material and the present agglomerates (that is, both of the platinum-containing material and the present agglomerates) may be biased toward one surface side of the electrolyte membrane.

In the case where the electrolyte membrane is applied to a water electrolyzer, the side of the electrolyte membrane to which the platinum-containing material is biased is preferably located on the anode side from the viewpoint of more suppression of hydrogen crossover.

In the present specification, the expression "the platinum-containing material is biased toward one surface side of the electrolyte membrane" means that the concentration of the platinum-containing material in a region extending from one surface (hereinafter also referred to as a "surface A") of the electrolyte membrane to a predetermined depth position (hereinafter also referred to as a "depth position B") before reaching the other surface (hereinafter also referred to as a "surface C") of the electrolyte membrane is higher than the concentration of the platinum-containing material in a region extending from the surface C to the depth position B.

Further, the expression "the present agglomerates are biased toward one surface side of the electrolyte membrane" means that the concentration of the present agglomerates in a region from the surface A to a depth position B is higher than the concentration of the present agglomerates in a region from the surface C to the depth position B.

Furthermore, the expression "the platinum-containing material and the present agglomerates are biased toward one surface side of the electrolyte membrane" means that the concentration of the platinum-containing material in a region from the surface A to a depth position B is higher than the concentration of the platinum-containing material in a region from the surface C to the depth position B and, at the same time, the concentration of the present agglomerates in the region from the surface A to the depth position B is higher than the concentration of the present agglomerates in the region from the surface C to the depth position B.

As a preferable embodiment of the electrolyte membrane in which the platinum-containing material is biased toward one surface side of the electrolyte membrane, an embodiment may be mentioned in which the concentration of the platinum-containing material in a region from the surface A to a depth position B₅₀ corresponding to 50% of the membrane thickness of the electrolyte membrane is higher than the concentration of the platinum-containing material in a region from the surface C to the depth position B₅₀.

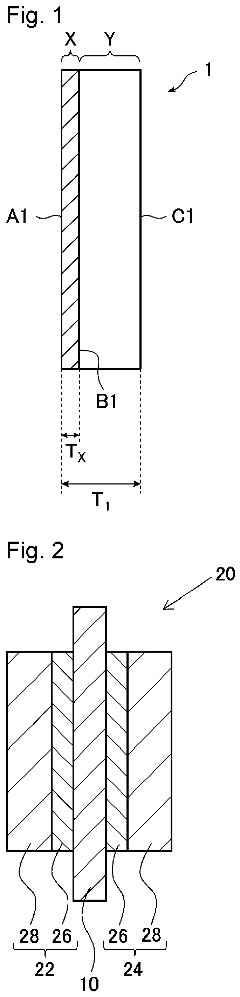

The state in which "the platinum-containing material is biased toward one surface side of the electrolyte membrane" will be described in detail below with reference to Fig. 1. Fig. 1 is a schematic cross-sectional view illustrating an example of the electrolyte membrane with biased arrangement of the platinum-containing material.

In Fig. 1, an electrolyte membrane 1 has a surface A1 as one surface and a surface C1 as the other surface. A depth position B1 represents a position at a distance T_{X} away from the surface A1 toward the surface C1.

The minimum distance T₁ from the surface A1 to the surface C1 of the electrolyte membrane 1 corresponds to the membrane thickness of the electrolyte membrane 1. The distance T_{X} is X% of the distance T₁. For example, in the case where the distance T_{X} is 20% of the distance T₁, the depth position B1 is a position corresponding to 20% of the membrane thickness (distance T₁) of the electrolyte membrane 1 from the surface A1 of the electrolyte membrane 1.

A region X represents a region from the surface A1 to the depth position B1, and a region Y represents a region from the surface C1 to the depth position B1.

In the case where there are convex-concave parts on the surface of the electrolyte membrane 1, the above distances are measured with respect to the position at which the membrane thickness of the electrolyte membrane 1 becomes minimum.

In Fig. 1, when the concentration of the platinum-containing material in the region X is higher than the concentration of the platinum-containing material in the region Y, it can be said that the platinum-containing material is biased toward one surface side of the electrolyte membrane.

With a view to obtaining more excellent effects of the present disclosure, the platinum-containing material contained in the electrolyte membrane is preferably present in a region from one surface of the electrolyte membrane to a position of 25% of the membrane thickness of the electrolyte membrane, particularly preferably 20%, further preferably 15%, still more preferably 10% of the membrane thickness of the electrolyte membrane. Further, it is more preferred that the platinum-containing material contained in the electrolyte membrane is present only in a region up to the above membrane thickness position.

The locations of presence of the platinum-containing material and the present agglomerates in the electrolyte membrane can be specified by elemental distribution analysis using, for example, an energy dispersive X-ray spectrometer (model "QUANTAX FlatQUAD", manufactured by Bruker).

The above-mentioned distance T_{X} is determined based on the obtained elemental distribution.

As a method for arranging the platinum-containing material biased toward one surface side of the electrolyte membrane, a method may be mentioned in which the electrolyte membrane is produced by laminating a first electrolyte layer containing the platinum-containing material and a second electrolyte layer containing the platinum-containing material at a lower concentration than the first electrolyte layer or containing no platinum-containing material.

As another method, a method may be mentioned in which an electrolyte membrane containing no platinum-containing material is immersed, from one side, in a solution containing platinum ions such that the platinum-containing material is impregnated in a region from one surface to a predetermined depth position of the electrolyte membrane.

The thickness of the electrolyte membrane is preferably 30 µm or more, more preferably 60 µm or more, further preferably 90 µm or more, and is preferably 400 µm or less, more preferably 300 µm or less, further preferably 200 µm or less, particularly preferably 100 µm or less.

Further, in order to prevent the agglomerates from being blocks in the electrolyte membrane, thus creating a portion at which the current hardly flows, leading to an increase of the resistance, the thickness of the electrolyte membrane is preferably 90 µm or more when the present agglomerates have an average particle size of 5 µm or more. The thickness of the electrolyte membrane is preferably 60 µm or more when the present agglomerates have an average particle size of less than 5 µm. The upper limits for both the cases are preferably within the above-described range of the thickness of the electrolyte membrane.

In the case where the electrolyte membrane has a multilayer structure, the thickness of the electrolyte membrane refers to the total thickness of the respective layers.

In the case where the electrolyte membrane has a multilayer structure formed with the above-mentioned first and second electrolyte layers, the ratio of the thickness of the first electrolyte layer to the thickness of the second electrolyte layer (thickness of first electrolyte layer/thickness of second electrolyte layer) is preferably 0.02 or higher, more preferably 0.05 or higher, further preferably 0.12 or higher, particularly preferably 0.19 or higher, and is preferably 0.80 or lower, more preferably 0.50 or lower, further preferably 0.30 or lower.

The thickness of the electrolyte membrane is measured on a magnified cross-sectional image of the electrolyte membrane (e.g. at a magnification of 100) taken by an optical microscope (model "BX-51", manufactured by Olympus Corporation). In the case where there are convex-concave parts on the surface of the electrolyte membrane, the thickness of the electrolyte membrane is an arithmetic mean of thickness measurements at total 20 points, i.e., 10 points on concave parts of the electrolyte membrane and 10 points on convex parts of the electrolyte membrane. In the case where yarns constituting the woven fabric are contained in convex parts of the electrolyte membrane, the thickness of such yarns is subtracted from the thickness of the convex parts.

### <Fluorinated polymer (I)>

The electrolyte membrane contains the fluorinated polymer (I).

The ion exchange capacity of the fluorinated polymer (I) is preferably 0.90 meq/g dry resin or more, more preferably more than 1.10 meq/g dry resin, further preferably 1.15 meq/g dry resin or more, particularly preferably 1.20 meq/g dry resin or more, still more preferably 1.25 meq/g dry resin or more, with a view to achieving a lower electrolysis voltage when the electrolyte membrane is applied to a water electrolyzer.

The ion exchange capacity of the fluorinated polymer (I) is preferably 2.00 meq/g dry resin or less, more preferably 1.50 meq/g dry resin or less, further preferably 1.43 meq/g dry resin or less, particularly preferably 1.35 meq/g dry resin or less in consideration of the strength of the membrane electrode assembly in a hydrated state.

The fluorinated polymer (I) may be one type or a laminate or mixture of two or more types.

Although the electrolyte membrane may contain a polymer other than the fluorinated polymer (I), it is preferred that the polymer in the electrolyte membrane substantially consists of the fluorinated polymer (I). Here, the expression "substantially consist of the fluorinated polymer (I)" means that the content of the fluorinated polymer (I) is 95 mass% or more to the total mass of the polymers in the electrolyte membrane. The upper limit of the content of the fluorinated polymer (I) is 100 mass% to the total mass of the polymers in the electrolyte membrane.

As examples of the polymer other than the fluorinated polymer (I), there may be mentioned one or more types of polyazole compounds selected from the group consisting of polymers of heterocyclic compounds each containing one or more nitrogen atoms in the ring and polymers of heterocyclic compounds each containing one or more nitrogen atoms and oxygen and/or sulfur atoms in the ring.

Specific examples of the polyazole compounds include polyimidazole compounds, polybenzimidazole compounds, polybenzobisimidazole compounds, polybenzoxazole compounds, polyoxazole compounds, polythiazole compounds and polybenzothiazole compounds.

In consideration of the oxidation resistance of the electrolyte membrane, a polyphenylene sulfide resin and a polyphenylene ether resin may also be mentioned as specific examples of the other polymer.

The fluorinated polymer (I) has ion exchange groups. Specific examples of the ion exchange groups include sulfonic acid functional groups and carboxylic acid functional groups. Sulfonic acid functional groups are preferred to achieve a lower electrolysis voltage when the electrolyte membrane is applied to a water electrolyzer.

In the following, embodiments of a fluorinated polymer having sulfonic acid functional groups (hereinafter also referred to as a fluorinated polymer (S)) will be discussed mainly.

The fluorinated polymer (S) preferably contains units based on a fluorinated olefin and units having a sulfonic acid functional group and a fluorine atom.

The fluorinated olefin may be, for example, a C₂₋₃ fluoroolefin having one or more fluorine atoms in the molecule. Specific examples of the fluoroolefin include tetrafluoroethylene (hereinafter also referred to as "TFE"), chlorotrifluoroethylene, vinylidene fluoride, vinyl fluoride and hexafluoropropylene. Among others, TFE is preferred in terms of the monomer production cost, the reactivity with other monomers and the ability to give the fluorinated polymer (S) with excellent properties.

Single type of the fluorinated olefin may be used or two or more types may be used in combination.

The units having a sulfonic acid functional group and a fluorine atom are preferably units represented by the formula (1).

Formula (1) -[CF₂-CF(-L-(SO₃M)ₙ)]-

Here, L is a (n+1)-valent perfluorohydrocarbon group which may contain an etheric oxygen atom.

The etheric oxygen atom may be located at a terminal end or may be located between carbon atoms of the perfluorohydrocarbon group.

The number of carbon atoms in the (n+1)-valent perfluorohydrocarbon group is preferably 1 or more, more preferably 2 or more, and is preferably 20 or less, more preferably 10 or less.

As L, preferred is a (n+1)-valent perfluoroaliphatic hydrocarbon group which may contain an etheric oxygen atom. More preferred is a divalent perfluoroalkylene group which may contain an etheric oxygen atom as corresponding to an embodiment of n = 1, or a trivalent perfluoroaliphatic hydrocarbon group which may contain an etheric oxygen atom as corresponding to an embodiment of n = 2.

The above-mentioned divalent perfluoroalkylene group may be linear or branched.

M is a hydrogen atom, an alkali metal or a quaternary ammonium cation. Two M may be the same or different.

n is 1 or 2.

As the units represented by the formula (1), units represented by the formula (1-1), units represented by the formula (1-2), units represented by the formula (1-3) or units represented by the formula (1-4) are preferred, and units represented by the formula (1-1) are more preferred.

Formula (1-1) -[CF₂-CF(-O-R^{f1}-SO₃M)]-

Formula (1-2) -[CF₂-CF(-R^{f1}-SO₃M)]-

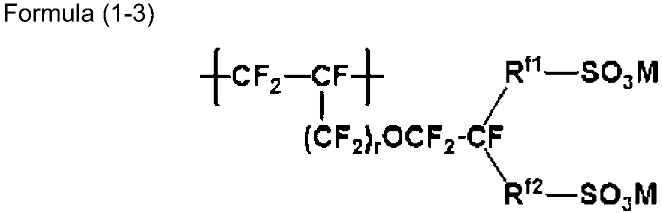

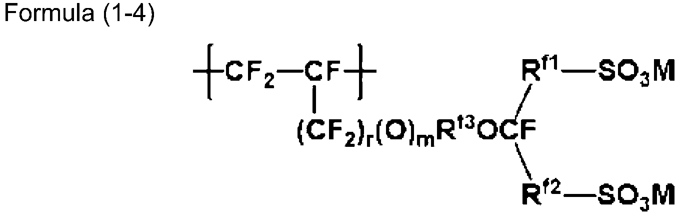

Here, R^{f1} is a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

R^{f2} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

R^{f3} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

r is 0 or 1.

m is 0 or 1.

M is as defined above.

As the units represented by the formula (1-1) and the units represented by the formula (1-2), units represented by the formula (1-5) are more preferred.

Formula (1-5) -[CF₂-CF(-(CF₂)ₓ-(OCF₂CFY)_{y}-O-(CF₂)_{z}-SO₃M)]-

Here, x is 0 or 1, y is an integer of 0 to 2, z is an integer of 1 to 4, Y is F or CF₃, and M is as described above.

Specific examples of the units represented by the formula (1-1) include the following units. In the formulae, w is an integer of 1 to 8, x is an integer of 1 to 5, and M is as defined above.

-[CF₂-CF(-O-(CF₂)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ₓ-SO₃M)]-

Specific examples of the units represented by the formula (1-2) include the following units. In the formulae, w is an integer of 1 to 8, and M is as defined above.

-[CF₂-CF(-(CF₂)_{w}-SO₃M)]-

-[CF₂-CF(-CF₂-O-(CF₂)_{w}-SO₃M)]-

As the units represented by the formula (1-3), preferred are units represented by the formula (1-3-1). In the formulae, M is as defined above.

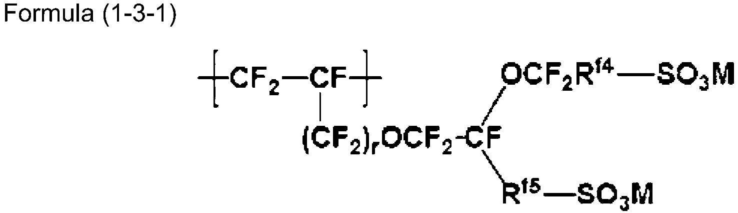

R^{f4} is a C₁₋₆ linear perfluoroalkylene group, and R^{f5} is a single bond or a C₁₋₆ linear perfluoroalkylene group which may contain an oxygen atom between carbon atoms. r and M are as defined above.

Specific examples of the units represented by the formula (1-3-1) include the following units.

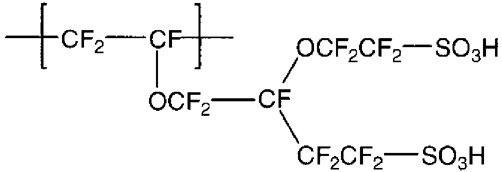

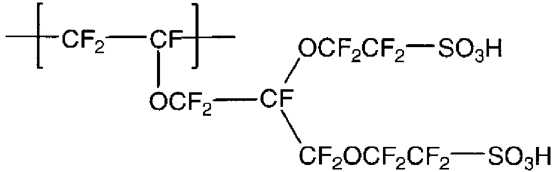

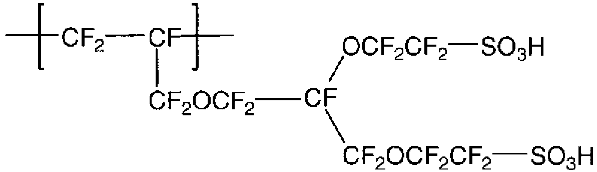

As the units represented by the formula (1-4), preferred are units represented by the formula (1-4-1). In the formulae, R^{f1}, R^{f2} and M are as defined above.

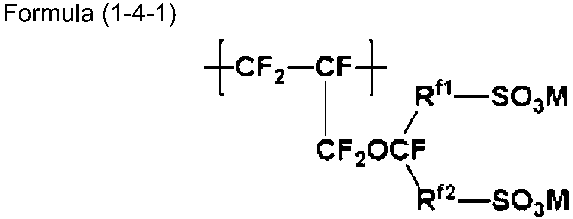

Specific examples of the units represented by the formula (1-4-1) include the following units.

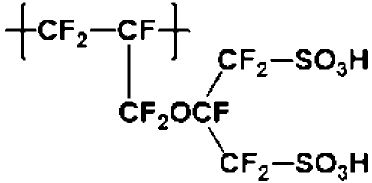

Single type of the units having a sulfonic acid functional group and a fluorine atom may be used or two or more types may be used in combination.

The fluorinated polymer (I) may contain, in addition to the units based on the fluorinated olefin and the units having a sulfonic acid functional group and a fluorine atom, units based on other monomer.

Specific examples of the other monomer include CF₂=CFR^{f6} (where R^{f6} is a C₂₋₁₀ perfluoroalkyl group), CF₂=CF-OR^{f7} (where R^{f7} is a C₁₋₁₀ perfluoroalkyl group) and CF₂=CFO(CF₂)ᵥCF=CF₂ (where v is an integer of 1 to 3).

The content of the units based on the other monomer is preferably 30 mass% or less to all the units in the fluorinated polymer (I) to ensure a certain level of ion exchange performance.

The content of the fluorinated polymer (I) is preferably 95 to 100 mass% to the total mass of the electrolyte membrane.

### <Platinum-containing material>

The electrolyte membrane contains a platinum-containing material.

The platinum-containing material can be any material containing a platinum atom. The platinum-containing material may be, for example, platinum itself, platinum oxide, a composite metal oxide containing platinum, or a platinum alloy.

Specific examples of the composite metal oxide containing platinum include MₓPt₃O₄ (where M is at least one metal atom selected from the group consisting of Li, Na, Mg, Ca, Zn, Cd, Co, Ni, Mn, Cu, Ag, Bi and Ce; and x is a value greater than 0 and smaller than or equal to 1).

Specific examples of the platinum alloy include alloys each containing platinum and at least one metal selected from the group consisting of transition metals and noble metals other than platinum.

The form of the platinum-containing material can be, for example, particulate form or sheet form. The platinum-containing material, when in particulate form, may be core-shell particles. Examples of the core-shell particles include those having a core made of carbon or containing a metal other than platinum and a shell containing platinum.

In the case where the platinum-containing material is in particulate form, the average particle size (D50) of the platinum-containing material is preferably 1 nm or more, more preferably 5 nm or more, further preferably 10 nm or more, particularly preferably 100 nm or more, and is preferably 10,000 nm or less, more preferably 5,000 nm or less, further preferably 3,000 nm or less.

The average particle size of the platinum-containing material is a volume-based 50% cumulative particle size (D50) determined by performing dispersion treatment on a dispersion containing the platinum-containing material and measuring the resulting dispersion by a particle size analyzer. The detailed measurement conditions are as described below. A dispersion containing the platinum-containing material and the fluorinated polymer is subjected to dispersion treatment (dispersion by a bead mill). After that, the particle size distribution of the dispersion is measured by a laser diffraction particle size analyzer (MT3300EXII-SDC, manufactured by MicrotracBEL Corporation) to obtain a volume-based 50% cumulative particle size of the platinum-containing material. An arithmetic mean of three measurements of the 50% cumulative particle size is taken as D50.

Otherwise, particle sizes of arbitrarily selected 20 different particles of the platinum-containing material in a cross-sectional image of the electrolyte membrane taken by a SEM (scanning electron microscope), a SEM-EDX (energy dispersive X-ray spectroscopy) or a TEM (transmission electron microscope), are measured, and the volume-based 50% cumulative particle size of the 20 particles may be taken as D50.

The mass of the platinum-containing material per 1 cm² of the electrolyte membrane is preferably 0.010 mg/cm² or more, more preferably 0.013 mg/cm² or more, further preferably 0.015 mg/cm² or more, and is preferably 0.050 mg/cm² or less. When the mass of the platinum-containing material is 0.010 mg/cm² or more, the occurrence of hydrogen crossover can be further suppressed. When the mass of the platinum-containing material is 0.050 mg/cm² or less, the electrolysis voltage can be further decreased, and a membrane electrode assembly and a water electrolyzer can be provided at low cost.

In the case where the electrolyte membrane has a multilayer structure, the mass of the platinum-containing material in at least one electrolyte layer (preferably, the above-mentioned first electrolyte layer) of the electrolyte membrane, per 1 cm² of the electrolyte membrane, is preferably 0.010 mg/cm² or more, more preferably 0.013 mg/cm² or more, further preferably 0.015 mg/cm² or more, and is preferably 0.050 mg/cm² or less. When the mass of the platinum-containing material is 0.013 mg/cm² or more, the occurrence of hydrogen crossover can be further suppressed. When the mass of the platinum-containing material is 0.050 mg/cm² or less, the electrolysis voltage can be further decreased, and a membrane electrode assembly and a water electrolyzer can be provided at low cost.

In the case where the electrolyte membrane has a single layer structure, the mass ratio of the platinum-containing material to the fluorinated polymer (I) (mass of platinum-containing material/mass of fluorinated polymer (I)) in the electrolyte membrane is preferably 0.0005 to 0.0040. When the mass ratio is 0.0005 or higher, the occurrence of hydrogen crossover can be further suppressed. When the mass ratio is 0.0040 or lower, the electrolysis voltage can be further decreased, and a membrane electrode assembly and a water electrolyzer can be provided at low cost.

In the case where the electrolyte membrane has a multilayer structure, the mass ratio of the platinum-containing material to the fluorinated polymer (I) (mass of platinum-containing material/mass of fluorinated polymer (I)) in at least one electrolyte layer (preferably, the above-mentioned first electrolyte layer) of the electrolyte membrane is preferably 0.005 or higher, more preferably 0.007 or higher, further preferably 0.014 or higher, and is preferably 0.024 or lower. When the mass ratio is 0.005 or higher, the occurrence of hydrogen crossover can be further suppressed. When the mass ratio is 0.024 or lower, the electrolysis voltage can be further decreased, and a membrane electrode assembly and a water electrolyzer can be provided at low cost.

The platinum-containing material may be supported on a carrier. Specific examples of the carrier include carbon carriers such as carbon black powders, graphitized carbon, carbon fibers and carbon nanotubes.

In the case where the platinum-containing material is supported on a carrier, the amount of the platinum-containing material supported to the total mass of the platinum-containing material and the carrier is preferably 10 mass% or more, more preferably 20 mass% or more, further preferably 30 mass% or more, and is preferably 50 mass% or less.

### <Present agglomerates>

The electrolyte membrane contains the present agglomerates.

The present agglomerates are agglomerates containing cerium oxide particles having an average particle size of 0.1 to 10 µm. The agglomerates containing cerium oxide particles preferably contains cerium oxide as the main component. The content of the cerium oxide particles in the present agglomerates is, to the total mass of the present agglomerates, preferably 80 mass% or more, more preferably 90 mass%, further preferably 95 mass% or more, and may be 100 mass%. That is, the present agglomerates may be agglomerates of the cerium oxide particles.

Cerium oxide may be CeO₂ (cerium(IV) oxide) or Ce₂O₃ (cerium(III) oxide), and is preferably CeO₂ in view of stability.

Cerium oxide may be doped with ions of a multi-valent metal such as zirconium or praseodymium.

The average particle size (D50) of the present agglomerates is 0.1 µm or more, preferably 0.6 µm or more, more preferably 1 µm or more, particularly preferably more than 3 µm. It is 10 µm or less, preferably 8 µm or less, more preferably 6 µm or less, particularly preferably 5 µm or less. When D50 of the present agglomerates is within the above range, an increase of the electrolysis voltage after water electrolysis is conducted for a certain period or formation of pinholes can further be suppressed.

The average particle size of the present agglomerates is determined by measuring particle sizes of arbitrarily selected 20 different agglomerates in a cross-sectional image of the electrolyte membrane, taken by a SEM, a SEM-EDX or a TEM and taking the volume-based 50% cumulative size of the 20 agglomerates as D50.

To adjust the average particle size of the present agglomerates, for example, a method of adjusting kneading conditions in the after-described electrolyte membrane production method may be mentioned.

The mass of the present agglomerates per 1 cm² of the electrolyte membrane is preferably 0.010 mg/cm² or more, more preferably 0.029 mg/cm² or more, further preferably 0.043 mg/cm² or more, particularly preferably 0.088 mg/cm² or more, most preferably 0.132 mg/cm² or more, and is preferably 1.000 mg/cm² or less, more preferably 0.500 mg/cm² or less, further preferably 0.300 mg/cm² or less.

When the mass of the present agglomerates is 0.010 mg/cm² or more, the electrolyte membrane tends to be whitish, and foreign substances present in the electrolyte membrane are likely to be visible. Thus, when the electrolyte membrane is applied to a water electrolyzer, a portion where the foreign substances are present in the electrolyte membrane can be avoided, and formation of pinholes in the electrolyte membrane, derived from the foreign substances, can be suppressed.

When the mass of the present agglomerates is 0.300 mg/cm² or less, the electrolysis voltage can be further decreased, and a membrane electrode assembly and a water electrolyzer can be provided at low cost.

### <Woven fabric>

The electrolyte membrane contains a woven fabric constituted by warp yarns and weft yarns (hereinafter warp yarns and weft yarns may also be referred to simply as "yarns").

The woven fabric functions to improve the dimensional stability, strength, handleability etc. of the electrolyte membrane.

The aperture ratio of the woven fabric is preferably 50% or higher, more preferably 55% or higher, further preferably 60% or higher, particularly preferably 70% or higher, with a view to achieving a lower electrolysis voltage, and preferably 90% or lower, more preferably 80% or lower, with a view to achieving higher strength of the membrane electrode assembly.

The aperture ratio of the woven fabric is calculated by the following formula (ε) based on the average diameter R1 of yarns constituting the woven fabric and the average spacing P1 (hereinafter also referred to as "pitch P1") between adjacent ones of yarns constituting the woven fabric.

Here, the average diameter R1 of yarns is an arithmetic mean of diameter measurements of 10 different yarns arbitrarilyselected on a magnified image of the woven fabric surface (e.g. at a magnification of 100) taken by a microscope. Further, the pitch P1 is an arithmetic mean of measurements of 10 different spacings arbitrarily selected on a magnified image of the woven fabric surface (e.g. at a magnification of 100) taken by a microscope. $Aperture ratio \left(%\right) of woven fabric = {\left[P1/\left(P1+R1\right)\right]}^{2} \times 100$ ε

The denier count of yarns constituting the woven fabric is preferably 2 or more. With a view to achieving higher strength and dimensional stability of the membrane electrode assembly, the denier count is preferably 10 or more, more preferably 15 or more, and is preferably 60 or less, more preferably 50 or less, further preferably 20 or less, with a view to achieving a lower electrolysis voltage.

Here, the denier count refers to a value that expresses the mass of 9,000 m of yarns in grams (g/9000 m).

With a view to achieving high strength and dimensional stability of the membrane electrode assembly, the density of yarns constituting the woven fabric is preferably 50 yarns/inch or more, more preferably 70 yarns/inch or more, further preferably 90 yarns/inch or more. With a view to achieving a lower electrolysis voltage, the density of yarns constituting the woven fabric is preferably 200 yarns/inch or less, more preferably 150 yarns/inch or less, further preferably 100 yarns/inch or less.

The yarns constituting the woven fabric can be each composed of either a monofilament consisting of one filament or a multifilament consisting of two or more filaments. Preferred is a monofilament.

The yarns constituting the woven fabric are preferably made of a material selected from the group consisting of a polytetrafluoroethylene (hereinafter also referred to as "PTFE"), a tetrafluoroethylene/perfluoroalkyl vinyl ether copolymer (hereinafter also referred to as "PFA"), a polyether ether ketone (hereinafter also referred to as "PEEK") and a polyphenylene sulfide (hereinafter also referred to as "PPS") to achieve higher durability of the yarns.

The yarns constituting the woven fabric are preferably in the form of slit yarns to achieve higher durability and strength of the yarns.

In the case where the material constituting the woven fabric is PTFE, in view of good balance between strength and handleability of the electrolyte membrane, the fabric weight of the woven fabric is preferably 20 g/m² or more, more preferably 30 g/m² or more, and is preferably 40 g/m² or less.

In the case where the material constituting the woven fabric is PFA, in view of good balance between strength and handleability of the electrolyte membrane, the fabric weight of the woven fabric is preferably 10 g/m² or more, and is preferably 30 g/m² or less, more preferably 20 g/m² or less.

In the case where the material constituting the woven fabric is PEEK, in view of good balance between strength and handleability of the electrolyte membrane, the fabric weight of the woven fabric is preferably 5 g/m² or more, and is preferably 40 g/m² or less, more preferably 30 g/m² or less.

In the case where the material constituting the woven fabric is PPS, in view of good balance between strength and handleability of the electrolyte membrane, the fabric weight of the woven fabric is preferably 5 g/m² or more, and is preferably 40 g/m² or less, more preferably 30 g/m² or less.

The content of the woven fabric to the total mass of the electrolyte membrane is preferably 3 mass% or more, more preferably 5 mass% or more, and is preferably 50 mass% or less, more preferably 40 mass% or less, further preferably 30 mass% or less.

### <Method for producing electrolyte membrane>

For example, the following method may be mentioned as an electrolyte membrane production method.

Using a mixture containing a polymer of a fluorinated monomer having a group convertible to an ion exchange group (hereinafter also referred to as a "fluorinated monomer (I')") (hereinafter also referred to as a "fluorinated polymer (I')"), the platinum-containing material and the present agglomerates, membranes P1 containing the fluorinated polymer (I'), the platinum-containing material and the present agglomerates are produced. The membrane P1, the woven fabric and the membrane P1 are stacked in this order and laminated together by laminating rolls or by a vacuum lamination apparatus to obtain a precursor membrane. Then, the groups convertible to ion exchange groups in the precursor membrane are converted to ion exchange groups. With this, an electrolyte membrane containing the fluorinated polymer (I), the platinum-containing material, the present agglomerates and the woven fabric is obtained.

The mixture is preferably kneaded preliminarily using a stirring machine.

The stirring machine may be, for example, a known stirring machine such as a twin screw extruder. The kneading conditions may be properly changed depending upon the desired average particle size of the present agglomerates. For example, in a case where the present agglomerates A are prepared under certain kneading conditions A using a twin screw extruder, to prepare the present agglomerates B having an average particle size smaller than that of the present agglomerates A, the present agglomerates B can be obtained under kneading conditions B with an increased number of revolutions of screw while the discharge amount is reduced as compared with the kneading conditions A.

The following method may also be mentioned as another method for producing the electrolyte membrane.

The fluorinated polymer (I) is first produced by converting groups convertible to ion exchange groups in the fluorinated polymer (I') to ion exchange groups. The woven fabric is impregnated with a dispersion having the fluorinated polymer (I), the platinum-containing material and the present agglomerates dispersed therein, and then dried. With this, an electrolyte membrane containing the fluorinated polymer (I), the platinum-containing material, the present agglomerates and the woven fabric is obtained.

By these methods, the electrolyte membrane having a single-layer structure (corresponding to the above-mentioned first electrolyte layer) is produced.

As a method for producing the electrolyte membrane having a multilayer structure, for example, the following method may be mentioned.

A membrane (precursor membrane) containing the fluorinated polymer (I') and the woven fabric is produced, and the groups convertible to ion exchange groups in the precursor membrane are converted to ion exchange groups, to obtain an electrolyte membrane A containing the fluorinated polymer (I) and the woven fabric. Further, an electrolyte membrane B is obtained by casting a dispersion having the fluorinated polymer (I), the platinum-containing material and the present agglomerates dispersed therein.

The electrolyte membrane A and the electrolyte membrane B are stacked in this order and laminated together by laminating rolls or by a vacuum lamination apparatus, thereby obtaining an electrolyte membrane containing the fluorinated polymer (I), the platinum-containing material, the present agglomerates and the woven fabric. By this method, the electrolyte membrane having a multilayer structure is produced. In the thus-produced multilayer-structured electrolyte membrane, the platinum-containing material and the present agglomerates are biased toward one surface side of the electrolyte membrane.

The following method may also be mentioned as another method for producing the electrolyte membrane with a multilayer structure. The first electrolyte layer containing the fluorinated polymer (I), the platinum-containing material and the present agglomerates and an electrolyte layer (corresponding to the second electrolyte layer) containing no platinum-containing material or containing the platinum-containing material at a lower concentration than the first electrolyte layer are stacked and laminated together by hot pressing. Here, the woven fabric is included in at least one of the first electrolyte layer and the second electrolyte layer. By this method, the electrolyte membrane having a multilayer structure is produced. In the thus-produced multilayer-structured electrolyte membrane, the platinum-containing material is biased toward one surface side of the electrolyte membrane.

As the fluorinated polymer (I'), preferred is a polymer of a fluorinated monomer having a group convertible to a sulfonic acid functional group (hereinafter also referred to as a "fluorinated monomer (S')") (hereinafter also referred to as a "fluorinated polymer (S')"). More preferred is a copolymer of a fluorinated olefin and a monomer having a group convertible to a sulfonic acid functional group and a fluorine atom.

The fluorinated polymer (S') will be now described in detail below.

As a copolymerization method for production of the fluorinated polymer (S'), a known method such as solution polymerization, suspension polymerization or emulsion polymerization may be employed.

The fluorinated olefin can be any of those mentioned above, and is preferably TFE in terms of the monomer production cost, the reactivity with other monomers and the ability to give the fluorinated polymer (S) with excellent properties.

Single type of the fluorinated olefin may be used or two or more types may be used in combination.

The fluorinated monomer (S') may be a compound having at least one fluorine atom in the molecule, having an ethylenic double bond and having a group convertible to a sulfonic acid functional group.

As the fluorinated monomer (S'), a compound represented by the formula (2) is preferred in terms of the monomer production cost, the reactivity with other monomers and the ability to give the fluorinated polymer (S) with excellent properties.

Formula (2) CF₂=CF-L-(A)ₙ

In the formula (2), L and n are as defined above.

A is a group convertible to a sulfonic acid functional group. As the group convertible to a sulfonic acid functional group, preferred is a functional group that can be converted to a sulfonic acid functional group by hydrolysis. Specific examples of the group convertible to a sulfonic acid functional group include -SO₂F, -SO₂Cl and - SO₂Br. The n A groups may be the same or different.

As the compound represented by the formula (2), a compound represented by the formula (2-1), a compound represented by the formula (2-2), a compound represented by the formula (2-3) or a compound represented by the formula (2-4) is preferred.

Formula (2-1) CF₂=CF-O-R^{f1}-A

Formula (2-2) CF₂=CF-R^{f1}-A

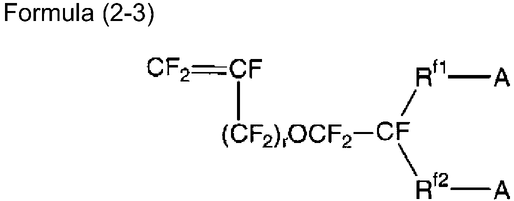

In the formulae, R^{f1}, R^{f2}, r and A are as defined above.

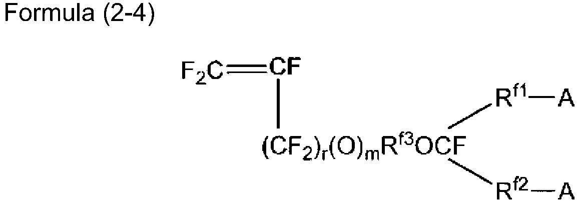

In the formula, R^{f1}, R^{f2}, R^{f3}, r, m and A are as defined above.

As the compound represented by the formula (2-1) and the compound represented by the formula (2-1), a compound represented by the formula (2-5) is preferred.

Formula (2-5) CF₂=CF-(CF₂)ₓ-(OCF₂CFY)_{y}-O-(CF₂)_{z}-SO_{3F}

In the formula, x, y, z and Y are as defined above.

Specific examples of the compound represented by the formula (2-1) include the following compounds where w is an integer of 1 to 8 and x is an integer of 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ₓ-SO₂F

Specific examples of the compound represented by the formula (2-2) include the following compounds where w is an integer of 1 to 8

CF₂=CF-(CF₂)_{w}-SO₂F

CF₂=CF-CF₂-O-(CF₂)_{w}-SO₂F

As the compound represented by the formula (2-3), a compound represented by the formula (2-3-1) is preferred.

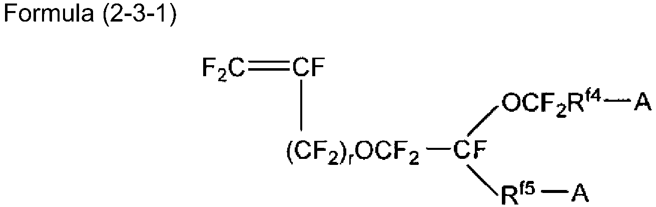

In the formula, R^{f4}, R^{f5}, r and A are as defined above.

Specific examples of the compound represented by the formula (2-3-1) include the following compounds.

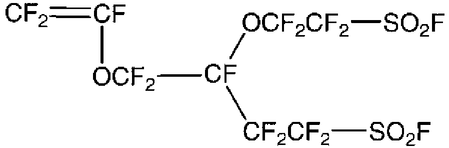

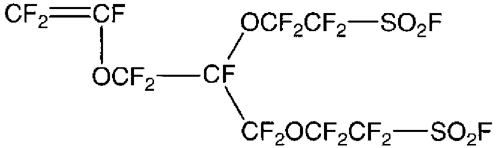

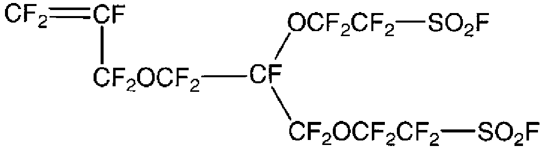

As the compound represented by the formula (2-4), a compound represented by the formula (2-4-1) is preferred.

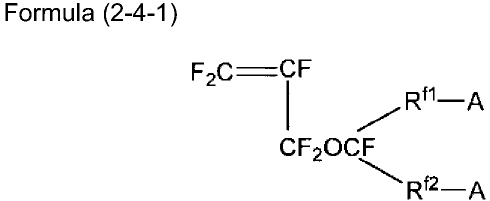

In the formula, R^{f1}, R^{f2} and A are as defined above.

Specific examples of the compound represented by the formula (2-4-1) include the following compound.

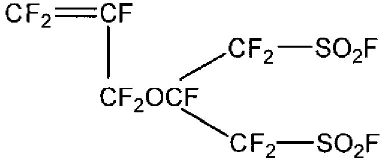

Single type of the fluorinated monomer (S') may be used or two or more types may be used in combination.

For production of the fluorinated polymer (S'), other monomer may be used in addition to the fluorinated olefin and the fluorinated monomer (S'). The other monomer can be any of those mentioned above.

The ion exchange capacity of the fluorinated polymer (I') can be adjusted by changing the content of groups convertible to ion exchange groups in the fluorinated polymer (I').

The conversion of groups convertible to ion exchange groups in the precursor membrane to ion exchange groups may be carried out by, for example, subjecting the precursor membrane to treatment such as hydrolysis and conversion to acid form. In particular, preferred is contact treatment of the precursor membrane with an aqueous alkaline solution.

The contact treatment of the precursor membrane with the aqueous alkaline solution may be performed by, for example, immersion of the precursor membrane in the aqueous alkaline solution, spraying of the aqueous alkaline solution onto the surface of the precursor membrane, or the like.

The temperature of the aqueous alkaline solution is preferably 30°C or higher, more preferably 40°C or higher, and is preferably 100°C or lower. The contact time of the precursor membrane and the aqueous alkaline solution is preferably 3 minutes or more, more preferably 5 minutes or more, and is preferably 150 minutes or less, more preferably 50 minutes or less.

The aqueous alkaline solution preferably contains an alkali metal hydroxide, a water-soluble organic solvent and water.

The alkali metal hydroxide may be sodium hydroxide or potassium hydroxide.

In the present specification, the water-soluble organic solvent refers to an organic solvent easily soluble in water. Specifically, preferred is an organic solvent with a solubility of 0.1 g or more in 1000 mL of water (20°C), and an organic solvent with a solubility of 0.5 g or more is more preferred. The water-soluble organic solvent preferably contains at least one kind selected from the group consisting of aprotic organic solvents, alcohols and amino alcohols, and more preferably contains an aprotic organic solvent.

Single type of the water-soluble organic solvent may be used or two or more types may be used in combination.

Specific examples of the aprotic organic solvents include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohols include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohols include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably 1 mass% or higher, more preferably 3 mass% or higher, and is preferably 60 mass% or lower, more preferably 55 mass% or lower.

The content of the water-soluble organic solvent in the aqueous alkaline solution is preferably 1 mass% or more, more preferably 3 mass% or more, and is preferably 60 mass% or less, more preferably 55 mass% or less.

The concentration of water in the aqueous alkaline solution is preferably 39 to 80 mass%.

After the contact treatment of the precursor membrane with the aqueous alkaline solution, any treatment for removing the aqueous alkaline solution may be performed. The aqueous alkaline solution may be removed by, for example, washing, with water, the precursor membrane contact-treated with the aqueous alkaline solution.

After the contact treatment of the precursor membrane with the aqueous alkaline solution, the thus-obtained membrane may be further treated by contact with an aqueous acidic solution to convert the ion exchange groups to acid form.

The contact treatment of the precursor membrane with the aqueous acidic solution may be performed by, for example, immersion of the precursor membrane in the aqueous acidic solution or spraying of the aqueous acidic solution onto the surface of the precursor membrane.

The aqueous acidic solution preferably contains an acid component and water.

Specific examples of the acid component include hydrochloric acid and sulfuric acid.

### [Membrane electrode assembly]

The membrane electrode assembly of the present disclosure contains the above electrolyte membrane.

The membrane electrode assembly preferably includes the above-mentioned electrolyte membrane, a cathode catalyst layer provided on one surface of the electrolyte membrane and an anode catalyst layer provided on the other surface of the electrolyte membrane.

Fig. 2 is a cross-sectional view illustrating an example of the membrane electrode assembly of the present disclosure. In the example of Fig. 2, a membrane electrode assembly 20 includes: an anode 22 with a catalyst layer 26 and a gas diffusion layer 28; a cathode 24 with a catalyst layer 26 and a gas diffusion layer 28; and an electrolyte membrane 10 disposed between the anode 22 and the cathode 24 in contact with the respective catalyst layers 26.

Although the electrolyte membrane has a single-layer structure in the example of Fig. 2, the electrolyte membrane may alternatively have a multilayer structure. Specific examples and preferred embodiments of the electrolyte membrane having a multilayer structure are the same as those described above.

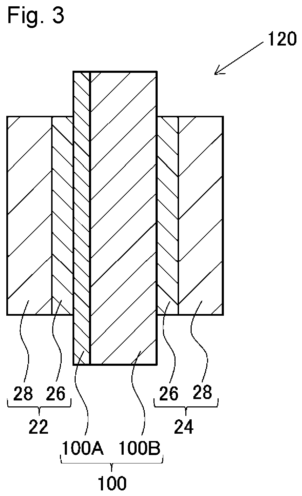

Fig. 3 is a schematic cross-sectional view illustrating an example of the membrane electrode assembly of the present disclosure in the case where the electrolyte membrane has a multilayer structure. The structure of a membrane electrode assembly 120 shown in Fig. 3 is similar to the structure of the membrane electrode assembly 20 shown in Fig. 2, except that an electrolyte membrane 100 is used in place of the electrolyte membrane 10 shown in Fig. 2. The electrolyte membrane 100 shown in Fig. 3 has a first electrolyte layer 100A and a second electrolyte layer 100B arranged in this order from the anode 22 side to the cathode 24 side.

The first electrolyte layer 100A contains the fluorinated polymer (I), the platinum-containing material and the present agglomerates.

The second electrolyte layer 100B contains the fluorinated polymer (I) and the present agglomerates. The second electrolyte layer 100B contains the platinum-containing material at a lower concentration than the first electrolyte layer or contains no platinum-containing material.

At least one of the first electrolyte layer 100A and the second electrolyte layer 100B contains the woven fabric.

Although the electrolyte membrane has a double-layer structure in the example of Fig. 3, the electrolyte membrane may have a structure of three or more layers.

In the example of Fig. 3, only the platinum-containing material is biased toward one surface side of the electrolyte membrane. In the electrolyte membrane included in the membrane electrode assembly of the present disclosure, both of the platinum-containing material and the present agglomerates may be biased toward one surface side of the electrolyte membrane.

### <Anode and cathode>

Each of the anode and the cathode has a catalyst layer. In the example of Fig. 2, each of the anode 22 and the cathode 24 has a catalyst layer 26 and a gas diffusion layer 28.

The catalyst layer may be, for example, a layer containing a catalyst and a polymer having ion exchange groups.

Specific examples of the catalyst include: a supported catalyst having platinum, a platinum alloy or a platinum-based core-shell catalytic material supported on a carbon carrier; an iridium oxide catalyst; a composite oxide catalyst containing iridium and a different metal element; an iridium oxide alloy-based catalyst; and an iridium oxidebased core-shell catalytic material. As the carbon carrier, a carbon black powder may be mentioned.

As the polymer having ion exchange groups, a fluorinated polymer having ion exchange groups may be mentioned, for example, the above-described fluorinated polymer (I) may be used.

The mass of the catalyst metal per 1 cm² of the catalyst layer is preferably 0.05 mg/cm² or more, more preferably 0.2 mg/cm² or more, and is preferably 4 mg/cm² or less, more preferably 2 mg/cm² or less, further preferably 1 mg/cm² or less.

The mass ratio of the catalyst to the polymer having ion exchange groups (mass of catalyst/mass of polymer having ion exchange groups) in the catalyst layer is preferably 2 to 6.

The gas diffusion layer functions to promptly diffuse gas generated from the catalyst layer to the outside of the catalyst layer, and also functions as a current collector. For example, the gas diffusion layer can be in the form of a carbon paper, a carbon cloth, a carbon felt, a sintered product of titanium oxide fiber, a sintered product of titanium oxide particles, or the like. In view of the facts that: the anode side is high in potential and carbon materials are oxidized during use, it is preferred to use a sintered product of titanium oxide fiber or a sintered product of titanium oxide particles. A sintered product of titanium oxide may be plated with platinum or the like as necessary.

The cathode gas diffusion layer may be made water repellent by applying PTFE or the like.

Although the membrane electrode assembly of Fig. 2 has gas diffusion layers 28, the gas diffusion layers are optional, and the membrane electrode assembly may have no gas diffusion layers.

Each of the thicknesses of the anode and the cathode is preferably 5 µm or more, and is preferably 100 µm or less, more preferably 50 µm or less, further preferably 30 µm or less, particularly preferably 15 µm or less.

Each of the thicknesses of the anode and the cathode is determined by observing, with a laser microscope, a cross section of the membrane electrode assembly cut in the thickness direction, as an arithmetic mean of thickness measurements at arbitrary 20 points on the cross-sectional image of the membrane electrode assembly.

### <Membrane electrode assembly production method>

A membrane electrode assembly production method includes forming the cathode catalyst layer on one surface of the electrolyte membrane and forming the anode catalyst layer on the other surface of the electrolyte membrane.

For example, the membrane electrode assembly may be produced by using a laminate having the anode catalyst layer on a releasable base material (such as an ETFE (ethylene/tetrafluoroethylene) sheet) and a laminate having the cathode catalyst layer on a releasable base material (such as an ETFE sheet), bonding the catalyst layers to both sides of the electrolyte membrane and peeling off the releasable base materials.

In each of the above-mentioned laminates, the gas diffusion layer may be provided between the catalyst layer and the releasable base material. In this case, the gas diffusion layer is arranged on the opposite side of the catalyst layer from the electrolyte membrane.

The catalyst layers may be formed by applying a catalyst layer forming ink to predetermined areas (such as surfaces of the releasable base materials), followed by drying as necessary. The catalyst layer forming ink is a dispersion of the polymer having ion exchange groups and the catalyst in a dispersion medium.

### <Applications>

The membrane electrode assembly of the present disclosure is suitably applicable to a polymer electrolyte membrane water electrolyzer.

### [Water electrolyzer and hydrogen production method]

The water electrolyzer of the present disclosure contains the above-mentioned membrane electrode assembly.

The water electrolyzer preferably includes the above-mentioned membrane electrode assembly, a water supply unit for supplying water to the anode catalyst layer side and a power supply unit for electrical connection between the anode catalyst layer side and the cathode catalyst layer side.

In the water electrolyzer of the present disclosure, when a direct-current voltage is applied by the power supply unit in a state that water is supplied to the anode catalyst layer side by the water supply unit, water is decomposed into oxygen and protons on the anode catalyst layer side. The protons transferring to the cathode catalyst layer side through the electrolyte membrane receive electrons to form hydrogen on the cathode catalyst layer side.

The water electrolyzer of the present disclosure may have the same configuration as that of a known water electrolyzer (for example, an oxygen recovery member to recover the generated oxygen and a hydrogen recovery member to recover the generated hydrogen) except that it has the above members.

Further, the hydrogen production method of the present disclosure comprises electrolyzing water (electrolytic solution) using the water electrolyzer according to the present disclosure to produce hydrogen. According to the hydrogen production method of the present disclosure, which employs the water electrolyzer of the present disclosure, hydrogen can be produced efficiently.

### EXAMPLES

Now, the present invention will be described in further detail with reference to Examples. Ex. 1 to 7, 10 and 11 correspond to Examples of the present invention, and Ex. 8 and 9 correspond to Comparative Examples. It should be understood that the present invention is by no means restricted thereto.

### [Ion exchange capacity of fluorinated polymer]

The weight of a fluorinated polymer was measured, after 24 hours of incubation in a glove box purged with dry nitrogen, as the dry mass of the fluorinated polymer. Then, the fluorinated polymer was immersed in a 2 mol/L aqueous sodium chloride solution at 60°C for 1 hour. After the fluorinated polymer was washed with ultrapure water and recovered, the solution in which the fluorinated polymer had been immersed was titrated with 0.1 mol/L aqueous sodium hydroxide solution to determine the ion exchange capacity (meq/g dry resin) of the fluorinated polymer.

### [Thickness of electrolyte membrane]

The thickness of an electrolyte membrane was measured on a magnified cross-sectional image of the electrolyte membrane taken (at an objective lens magnification of 50) by a laser microscope (model "VK-X1000", manufactured by KEYENCE CORPORATION) under the conditions of a temperature of 23°C and a relative humidity of 50%RH.

### [Average particle size of agglomerates]

The average particle size of the agglomerates containing cerium oxide particles is obtained by measuring particle sizes of 20 arbitrary agglomerates in a cross-sectional image of the electrolyte membrane taken by a SEM-EDX under the following conditions and taking the volume-based 50% cumulative size as D50.

### <Measurement conditions>

Apparatus: SU6600 manufactured by Hitachi High-Tech Corporation and Noran System 6 manufactured by Thermo Fisher Scientific
Accelerating voltage: 10 kV
Working Distance≒15 mm
Probe current: medium

### [Electrolysis voltage increase]

A membrane electrode assembly was heat-treated at 150°C for 15 minutes and set in a water electrolysis evaluation jig EH50-25 (manufactured by Greenlight Innovation).

To fully hydrate the polymer electrolyte membrane and the ionomers in the electrodes, pure water at 80°C and ordinary pressure with an electrical conductivity of 1.0 µS/cm or less was supplied to both the anode side and the cathode side at a flow rate of 50 mL/min for 12 hours. Then, the cathode side was purged with nitrogen.

After the nitrogen purge, the evaluation jig with the membrane electrode assembly was operated by a direct current power source PWR1600L manufactured by Kikusui Electronics Corporation at a current density of 2 A/cm² for 500 hours by supplying pure water at 80°C and ordinary pressure with an electrical conductivity of 1.0 µS/cm or less to the anode side at a flow rate of 50 mL/min and keeping the pressure of gas generated from the cathode side at atmospheric pressure. Evaluation was conducted based on a voltage difference (voltage increase) as between immediately after the start of the operation and 500 hours after the start. The grade A, B, C or D is preferred.
A: Voltage difference of less than 20 mV
B: Voltage difference of 20 mV or more and less than 30 mV
C: Voltage difference of 30 mV or more and less than 40 mV
D: Voltage difference of 40 mV or more and less than 50 mV
E: Voltage difference of 50 mV or more

### [Pinholes]

A membrane electrode assembly was heat-treated at 150°C for 15 minutes and set in a water electrolysis evaluation jig EH50-25 (manufactured by Greenlight Innovation).

To fully hydrate the polymer electrolyte membrane and the ionomers in the electrodes, pure water at 80°C and ordinary pressure with an electrical conductivity of 1.0 µS/cm or less was supplied to both the anode side and the cathode side at a flow rate of 50 mL/min for 12 hours. Then, the cathode side was purged with nitrogen.

After the nitrogen purge, the evaluation jig with the membrane electrode assembly was operated by a direct current power source PWR1600L manufactured by Kikusui Electronics Corporation at a current density of 2 A/cm² for 1,000 hours by supplying pure water at 80°C and ordinary pressure with an electrical conductivity of 1.0 µS/cm or less to the anode side at a flow rate of 50 mL/min and keeping the pressure of gas generated from the cathode side at 0.9 MPa.

After the operation, the number of pinholes (perforations) in the electrolyte membrane of the membrane electrode assembly was measured by a pinhole detector (model "TRS-70", manufactured by Sanko Electronic Laboratory Co., Ltd.). The grade A or B is preferred.
A: No pinholes
B: One or two pinholes
C: Three or more pinholes

### [Ex. 1]

By copolymerization of CF₂=CF₂ and a monomer represented by the following formula (X), fluorinated polymer (I'-1) (ion exchange capacity: 1.25 meq/g dry resin) was produced. Here, the ion exchange capacity in the parentheses expresses the ion exchange capacity of a fluorinated polymer obtained by hydrolyzing the fluorinated polymer (I'-1) according to the procedure described later.

CF₂=CF-O-CF₂CF(CF₃)-O-CF₂CF₂-SO₂F (X)

Then, using a twin screw extruder (manufactured by The Japan Steel Works, Ltd.), the fluorinated polymer (I'-1), platinum black (manufactured by TANAKA PRECIOUS METAL TECHNOLOGIES Co., Ltd., "TEC90300", platinum-containing material) and cerium oxide (manufactured by FUJIFILM Wako Pure Chemical Corporation, primary particle size: less than 10 nm, CeO₂) were kneaded to obtain a kneaded product. Among the kneading conditions, the discharge amount and the number of revolutions of screw were adjusted so that the agglomerates containing cerium oxide particles had the desired average particle size. For example, the present agglomerates obtained have a smaller particle size by increasing the number of revolutions of screw while the discharge amount is decreased. A kneaded product at a heat-mixing portion of the twin-screw extruder, was melted, and the melt of the kneaded product was extruded from a T die to attach the melt of the kneaded product on a base material composed of a linear low density polyethylene (LLDPE) film (melting point: 110 to 120°C) to obtain film-attached base material Y1 having film α1 (membrane thickness: 45 µm) formed on the base material.

Using 18.6-denier yarns of PFA as warp yarns and weft yarns, woven fabric A1 was produced by plain weaving such that the density of the PFA yarns was 100 yarns/inch. The fabric weight of the woven fabric A1 was 16.3 g/m². The warp yarns and weft yarns used were in the form of slit yarns.

The film-attached base material Y1, the woven fabric A1 and the film-attached base material Y1 were stacked in this order. At this time, the film-attached base materials Y1 were arranged such that the films α1 of the film-attached base materials Y1 were brought into contact with the woven fabric A1.

These stacked members were thermally press-bonded together by a flat press machine at a temperature of 160°C and a surface pressure of 30 MPa/m² for 10 minutes, and then, the base materials on both sides were peeled off at a temperature of 50°C to obtain a precursor membrane.

The precursor membrane was immersed in a solution of dimethyl sulfoxide/potassium hydroxide/water = 30.0/5.5/64.5 (mass ratio) at 95°C for 30 minutes to hydrolyze and convert groups convertible to sulfonic acid functional groups in the precursor membrane to K-form sulfonic acid functional groups, and washed with water. The thus-obtained membrane was immersed in 1M sulfuric acid to convert the terminal groups from K-form to H-form, and dried to obtain electrolyte membrane 1 (thickness: 90 µm) of Ex. 1.

A fluorinated polymer (ion exchange capacity: 1.10 meq/g dry resin) produced by copolymerization of CF₂=CF₂ and the above-mentioned monomer (X), followed by conversion to acid form through hydrolysis and acid treatment, was dispersed in a solvent of water/ethanol in a ratio of 40/60 (mass%) to obtain a dispersion with a solid content of 26.0 mass% (hereinafter also referred to as "dispersion Y").

The obtained dispersion Y (33.0 g) was mixed with ethanol (18.06 g) and ZEORORA H (manufactured by Zeon Corporation, 10.58 g) by a planetary centrifugal mixer (THINKY MIXER, manufactured by THINKY CORPORATION) at 2200 rpm for 5 minutes. The mixed composition (54.06 g) was mixed with ethanol (46.44 g) and water (75.75 g) and further mixed with an iridium oxide catalyst (40.0 g) (manufactured by TANAKA PRECIOUS METAL TECHNOLOGIES Co., Ltd.) containing 74.8 mass% iridium and having a specific surface area of 100 m²/g. The resulting mixed composition was processed in a planetary bead mill (number of revolutions: 300 rpm) for 90 minutes to obtain an anode catalyst ink with a solid content of 22 mass%.

The anode catalyst ink was applied by an applicator to an ETFE sheet such that the amount of iridium applied was 1.0 mg/cm², dried at 80°C for 10 minutes and heat-treated at 150°C for 15 minutes, thereby obtaining an anode catalyst layer decal.

A supported catalyst having 46 mass% platinum supported on a carbon powder ("TEC10E50E" manufactured by TANAKA PRECIOUS METAL TECHNOLOGIES Co., Ltd.) (11 g) was mixed and milled with water (59.4 g) and ethanol (39.6 g) in an ultrasonic homogenizer to obtain a catalyst dispersion.

To the catalyst dispersion, a previously kneaded mixture (29.2 g) of the dispersion Y (20.1 g), ethanol (11 g) and ZEORORA H (manufactured by Zeon Corporation) (6.3 g) was added. Further, water (3.66 g) and ethanol (7.63 g) were added to the catalyst dispersion. The obtained dispersion was mixed in a paint conditioner for 60 minutes to obtain a cathode catalyst ink with a solid content of 10.0 mass%.

The cathode catalyst ink was applied by a die coater to an ETFE sheet, dried at 80°C and heat-treated at 150°C for 15 minutes, thereby obtaining a cathode catalyst layer decal with a platinum content of 0.4 mg/cm².

The catalyst layer of the anode catalyst layer decal was arranged to face one surface of the electrolyte membrane 1, and the catalyst layer of the cathode catalyst layer decal was arranged to face the other surface of the electrolyte membrane 1. Then, the anode catalyst layer, the electrolyte membrane 1 and the cathode catalyst layer were laminated together by hot pressing for 10 minutes at a press temperature of 150°C and a pressure of 3 MPa. After cooling to 70°C and releasing the pressure, the resulting laminate was taken out, and the ETFE sheets of the anode catalyst layer decal and the cathode catalyst layer decal were peeled off to obtain a membrane electrode assembly having an electrode area of 16 cm². The above-mentioned evaluations were made on the thus-obtained membrane electrode assembly. The results are shown in Table 1.

In the case where the presence of foreign objects in the electrolyte membrane 1 was confirmed by visual inspection, the electrolyte membrane 1 from which the foreign objects had been removed was used for production of the membrane electrode assembly. The same applies to the following Ex.

### [Ex. 2 to 11]

A membrane electrode assembly was prepared in the same manner as in Ex. 1 except that the conditions were changed as identified in Table 1 and that the kneading conditions were changed as follows.

For example, as the kneading conditions in Ex. 2, the discharge amount was increased and the number of revolutions of screw was decreased as compared with Ex. 1. As the kneading conditions in Ex. 3, the discharge amount was further increased and the number of revolutions of screw was decreased as compared with Ex. 2. As the kneading conditions in Ex. 8, the discharge amount was decreased and the number of revolutions of screw was increased as compared with Ex. 1. As the kneading conditions in Ex. 9, the discharge amount was increased and the number of revolutions of screw was decreased as compared with Ex. 5. In other Ex., in the same manner as the above Ex., the kneading conditions were changed so that the agglomerates containing cerium oxide particles had the average particle size as identified in Table 1.

In Table 1, IEC (meq/g) represents the ion exchange capacity (meq/g dry resin) of the fluorinated polymer (I).

The mass (mg/cm²) of platinum-containing material represents the mass of the platinum-containing material per 1 cm² of the electrolyte membrane.

The average particle size (µm) of agglomerates represents the average particle size of the agglomerates containing cerium oxide particles.

The mass (mg/cm²) of agglomerates represents the mass of the agglomerates containing cerium oxide particles per 1 cm² of the electrolyte membrane.

Using the membrane electrode assembly in each Ex. the above-described evaluation of electrolysis voltage increase and evaluation of pinholes were conducted. The result are shown in Table 1.

In Ex. in which the pinhole evaluation results was A (that is Ex. in which no pinholes were formed), evaluation is further conducted such that the pressure of gas generated from the cathode side is changed to 2 MPa, whereupon formation of no pinholes can be confirmed.

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Electrolyte membrane | Thickness (µm) | 90 | 90 | 90 | 90 | 90 | 60 | 60 | 90 | 90 | 90 | 90 |
| | Woven fabric | present | present | present | present | present | present | present | present | present | present | present |
| | IEC (meq/g) | 1.25 | 1.25 | 1.25 | 1.25 | 1.25 | 1.25 | 1.25 | 1.25 | 1.25 | 1.25 | 1.25 |
| | Mass (mg/cm²) of platinum-containing material | 0.015 | 0.015 | 0.015 | 0.015 | 0.015 | 0.015 | 0.015 | 0.015 | 0.015 | 0.015 | 0.015 |
| | Average particle size (µm) of agglomerates | 0.1 | 0.6 | 1 | 5 | 10 | 1 | 5 | 0.05 | 15 | 3 | 8 |
| | Mass (mg/cm²) of agglomerates | 0.043 | 0.043 | 0.043 | 0.043 | 0.043 | 0.029 | 0.029 | 0.043 | 0.043 | 0.043 | 0.043 |
| Evaluation results | Electrolysis voltage increase | D | C | B | A | A | B | A | E | A | B | A |
| | Pinholes | A | A | A | A | B | A | B | A | C | A | B |

As evident from Table 1, it was confirmed that by the electrolyte membrane of the present disclosure, an increase of the electrolysis voltage after water electrolysis is conducted for a certain period can be suppressed, and pinholes are less likely to form.

The entire disclosure of Japanese Patent Application No. 2023-221212 filed on December 27, 2023 including specification, claims, drawings and summary is incorporated herein by reference in its entirety.

### REFERENCE SYMBOLS

- 1, 10, 100:: electrolyte membrane
- 20, 120:: membrane electrode assembly
- 22:: anode
- 24:: cathode
- 26:: catalyst layer
- 28:: gas diffusion layer
- 100A:: first electrolyte layer
- 100B:: second electrolyte layer
- A1,C1:: surface
- B1:: depth position
- T₁,T_{X}:: distance
- X,Y:: region

## Claims

1. A polymer electrolyte membrane, which comprises a fluorinated polymer having ion exchange groups, a platinum-containing material, agglomerates containing cerium oxide particles, and a woven fabric,
wherein the agglomerates have an average particle size of 0.1 to 10 µm.

2. The polymer electrolyte membrane according to Claim 1, wherein the agglomerates have an average particle size of more than 3 µm.

3. The polymer electrolyte membrane according to Claim 1, wherein the fluorinated polymer has an ion exchange capacity of 0.90 to 2.00 meq/g dry resin.

4. The polymer electrolyte membrane according to Claim 1, wherein the mass of the agglomerates per 1 cm² of the polymer electrolyte membrane is 0.010 mg/cm² or more.

5. The polymer electrolyte membrane according to Claim 1, wherein the platinum-containing material is biased toward one surface side of the polymer electrolyte membrane.

6. The polymer electrolyte membrane according to Claim 1, wherein the platinum-containing material is supported on a carrier.

7. The polymer electrolyte membrane according to Claim 1, wherein the ion exchange groups of the fluorinated polymer are sulfonic acid functional groups.

8. The polymer electrolyte membrane according to Claim 1, wherein the fluorinated polymer has units represented by the formula (1-1):
formula (1-1) -[CF₂-CF(-O-R^{f1}-SO₃M)]-
in the formula (1-1), R^{f1} is a perfluoroalkylene group which may contain an oxygen atom between carbon atoms, and M is a hydrogen atom, an alkali metal or a quaternary ammonium cation.

9. The polymer electrolyte membrane according to Claim 1, wherein the woven fabric is constituted by a material selected from the group consisting of a polytetrafluoroethylene, a tetrafluoroethylene/perfluoroalkyl vinyl ether copolymer, a polyether ether ketone and a polyphenylene sulfide.

10. A membrane electrode assembly, which comprises the polymer electrolyte membrane as defined in any one of Claims 1 to 9,
a cathode catalyst layer provided on one surface of the polymer electrolyte membrane, and
an anode catalyst layer provided on the other surface of the polymer electrolyte membrane.

11. A water electrolyzer, which comprises the membrane electrode assembly as defined in Claim 10,
a power supply unit connecting the cathode catalyst layer side and the anode catalyst layer side of the membrane electrode assembly, and
a water supply unit to supply water to the anode catalyst layer side.

12. A hydrogen production method, which comprises electrolyzing water by the water electrolyzer as defined in Claim 11 to produce hydrogen.

13. A method for producing a membrane electrode assembly comprising the polymer electrolyte membrane as defined in any one of Claims 1 to 9, a cathode catalyst layer and an anode catalyst layer,
which comprises providing the cathode catalyst layer on one surface of the polymer electrolyte membrane, and providing the anode catalyst layer on the other surface of the polymer electrolyte membrane.
